# EUROPÄISCHE PATENTSCHRIFT

(11) **EP 2 532 077 B1**
(45) Veröffentlichungstag und Bekanntmachung des Hinweises auf die Patenterteilung: **09.04.2014**
(21) Anmeldenummer: 10785419.2
(22) Anmeldetag: 01.12.2010
(51) Int. Cl.: H02K 5/14

(54) **MONTAGEHILFE FÜR EINE BÜRSTENKOMMUTIERTE ELEKTRISCHE MASCHINE**
MOUNTING AID FOR A BRUSH-COMMUTATED ELECTRIC MOTOR
AUXILIAIRE DE MONTAGE POUR UNE MACHINE ÉLECTRIQUE À COMMUTATION PAR BALAIS

(30) Priorität: 01.02.2010 DE 102010001433
(43) Veröffentlichungstag der Anmeldung: 12.12.2012
(73) Patentinhaber: Robert Bosch GmbH, 70442 Stuttgart (DE)
(72) Erfinder: BAUER, Christian, 77886 Lauf (DE)
(86) Internationale Anmeldenummer: PCT/EP2010/068601
(87) Internationale Veröffentlichungsnummer: WO 2011/091889

(56) Entgegenhaltungen:
- EP-A1- 0 257 407
- DE-A1- 3 328 683

## Beschreibung

### Technisches Gebiet

Die Erfindung betrifft bürstenkommutierte elektrische Maschinen sowie deren Herstellung. Weiterhin betrifft die Erfindung eine Vorrichtung und ein Verfahren zur Montage einer elektrischen Maschine, insbesondere die Montage eines Kommutators der elektrischen Maschine.

### Stand der Technik

Die DE 3328683A1 zeigt eine Bürstentrageplatte eines Elektromotors bzw. einen Köcher, in der die Bürste axial verschiebbar gelagert ist, mit einer Haltezunge, wobei eine Rastnase der Haltezunge in einer Montagestellung in eine Bürste eingreit und diese dann mit Abstand zum Kollektor hält.

Die EP 0257407A1 wie DE 3328683A1 eine Bürstentragplatte mit Haltezunge zum Halten der Bürste. Zudem ermöglicht die Haltezunge ein leichtes Positionierne der Kollektors zwischen den Bürsten. Weiter weist die Haltezunge ein Lösestück auf, damit die Haltezunge aus ihrer Montagestellung leicht gelöst werden kann.

Bei mechanisch kommutierten elektrischen Maschinen erfolgt die elektrische Kontaktierung der Ankerwicklungen des Rotors in der Regel über einen Kommutator. Der Kommutator umfasst Bürstenanordnungen mit jeweils einer oder mehreren Bürstenelektroden. Die Bürstenelektroden sind in der Regel als Kohlebürsten ausgebildet. Die Bürstenelektroden sind auf an einem Rotor angeordnete Kommutatorlamellen aufgesetzt und kontaktieren diese dadurch. Dazu werden die Bürstenelektroden auf die Kommutatorlamellen eines Lamellenrades gedrückt und gleiten bei einer Bewegung des Rotors über diese hinweg, so dass je nach Rotorlage verschiedene Kommutatorlamellen kontaktiert werden. Um eine zuverlässige Kommutierung zu erreichen, ist es notwendig, dass die Bürstenelektrode mit einer optimierten Bürstenandruckkraft auf die Kommutatorlamellen drücken. So kann sichergestellt werden, die Bürstenelektroden bei einer Bewegung des Rotors nicht von den Kommutatorlamellen abheben können, wodurch die elektrische Kontaktierung unterbrochen würde.

Weiterhin ist es notwendig, sicherzustellen, dass die Bürstenelektroden an einer vorbestimmten (axialen) Position auf die Kommutatorlamellen positioniert werden, damit es zu einer gleichmäßigen Kommutierung kommen kann. Um dabei eine genaue Platzierung der Bürstenelektroden zu gewährleisten, kann ein Köchersystem vorgesehen werden, bei dem die Bürstenelektrode über einen Köcher geführt und durch eine Feder mit einer Federkraft auf die Kommutatorlamelle gedrückt wird. Bei einer sogenannten Hammerbürste wird diese Aufgabe durch eine speziell geformte Feder die direkt an der Bürstenelektrode befestigt ist, übernommen.

Bei der Herstellung einer derartigen elektrischen Maschine wird der Rotor mit dem daran angeordneten Lamellenrad des Kommutators in ein entsprechendes Gehäuse eingesetzt und gleichzeitig oder anschließend die Bürstenanordnung, die z.B. mit einem Lagerschild verbunden ist, auf das Gehäuse in axialer Richtung aufgesetzt, um so die elektrische Maschine fertigzustellen. Damit die Bürstenelektroden der Bürstenanordnungen während des Montagevorgangs nicht mit einer Seite des Lamellenrads oder einer sonstigen Komponente der elektrischen Maschine kollidieren, müssen diese während des Fügevorgangs entsprechend gegen die Federkraft ausgelenkt werden. Dies kann über eine geeignete Rampe erfolgen, die für die Montage dem Lamellenrad vorgelagert wird und über die die Bürstenelektroden auf das Lamellenrad geführt werden. Die Montage der Bürstenanordnungen mit Hilfe der Rampe, die die Bürstenelektroden zu den Kommutatorlamellen führt, hat jedoch den Nachteil, dass ein axialer Bauraum notwendig ist, der häufig nicht zur Verfügung steht.

Alternativ werden die Bürstenelektroden über einen Rückhaltemechanismus fixiert und dadurch während des Fügevorgangs von den Kommutatorlamellen ferngehalten. Sind die Bürstenanordnungen an ihren vorgesehenen Positionen, so wird dieser Federmechanismus von außen mittels spezieller Vorrichtungen wieder entriegelt und die Bürstenelektroden werden durch die Feder auf die Kommutatorlamellen aufgedrückt. Dazu ist eine gesonderte Vorrichtung zum Entriegeln notwendig, die einen erhöhten konstruktiven Aufwand bei der Montage einer derartigen elektrischen Maschine benötigt. Zudem wird durch den zusätzlichen Vorgang des Entriegelns des Rückhaltemechanismusses die Montagezeit der elektrischen Maschine verlängert.

Es ist daher Aufgabe der vorliegenden Erfindung, ein verbessertes Montageverfahren für eine bürstenkommutierte elektrische Maschine und eine Vorrichtung hierzu zur Verfügung zu stellen, womit die bürstenkommutierte elektrische Maschine in einfacher Weise montiert werden kann. Offenbarung der Erfindung

Diese Aufgabe wird durch die Montagevorrichtung für eine Bürstenanordnung einer elektrischen Maschine gemäß Anspruch 1 sowie durch die elektrische Maschine und durch das Verfahren zur Montage einer elektrischen Maschine gemäß den nebengeordneten Ansprüchen gelöst.

Weitere vorteilhafte Ausgestaltungen sind in den abhängigen Ansprüchen angegeben.

Gemäß einem ersten Aspekt ist eine Montagevorrichtung für eine Bürstenanordnung einer elektrischen Maschine vorgesehen. Die Montagevorrichtung umfasst:
- eine Bürstenelektrode, insbesondere eine Kohlebürste, die mit einem ersten Rastelement versehen ist,
- eine mit der Bürstenanordnung verbundene Rastvorrichtung, die ein zweites Rastelement und ein Auslöseelement aufweist, wobei das zweite Rastelement so mit dem ersten Rastelement zusammenwirkt, dass die Bürstenelektrode, insbesondere gegen eine Federkraft, in einer Montageposition gehalten wird,
wobei ein Poltopf der elektrischen Maschine so ausgebildet ist, dass das Auslöseelement bei einem Einsetzen der Bürstenanordnung in den Poltopf an einer definierten Position betätigt wird, um die Rastvorrichtung auszulösen, so dass die Bürstenelektrode freigegeben wird.

Eine Idee der obigen Montagevorrichtung besteht darin, dass sie ermöglicht, während des Aufsetzvorgang der Bürstenanordnung auf den Poltopf der elektrischen Maschine eine Rastvorrichtung, die die Bürstenelektrode in einer Montageposition hält, erst dann auszulösen, wenn die Bürstenanordnung die definierte Position erreicht hat. Die definierte Position entspricht im Wesentlichen der Position, an der die Bürstenelektrode ihre Endposition erreicht hat. Dadurch kann die Gefahr eines seitlichen Anstoßens der Bürstenelektrode an weitere Komponenten der elektrischen Maschine ausgeschlossen werden. Auf diese Weise wird insbesondere gewährleistet, dass beim Einsetzen der Bürstenanordnung in die elektrische Maschine die Bürstenelektroden nicht mit dem Lamellenträger kollidieren, solange bis die Bürstenelektrode sich in radialer Richtung senkrecht über dem Lamellenträger befinden. Sobald die Bürstenelektroden die definierte Position erreicht haben, bei denen sie mit einer Federkraft die Kommutatorlamellen des Lamellenträgers kontaktieren können, wird durch die Montagevorrichtung automatisch die Rastvorrichtung ausgelöst.

Weiterhin kann der Poltopf eine Struktur aufweisen, so dass, wenn die Bürstenanordnung die definierte Position erreicht hat, das Auslöseelement mit der Struktur in Eingriff gelangt ist, um die Rastvorrichtung auszulösen.

Gemäß einer weiteren Ausführungsform kann der Poltopf einen stufenförmigen oder rampenförmigen Abschnitt aufweisen, über den das Auslöseelement bei dem Einsetzen der Bürstenanordnung in den Poltopf hinweggleitet und dadurch bewegt wird, wobei das Auslöseelement so mit dem zweiten Rastelement gekoppelt ist, dass das zweite Rastelement durch die Bewegung des Auslöseelements bewegt wird, so dass es außer Eingriff mit dem ersten Rastelement gelangt.

Es kann vorgesehen sein, dass das Auslöseelement bei dem Einsetzen der Bürstenanordnung in den Poltopf in radialer Richtung in Richtung zu einer Drehachse eines Rotors der elektrischen Maschine gedrückt wird, wodurch das zweite Rastelement verschwenkt wird, und eine Anschlagsfläche des zweiten Rastelements außer Eingriff zu dem ersten Rastelement gelangt.

Weiterhin können das zweite Rastelement einer Rastnase und das erste Rastelement einer Rastausnehmung entsprechen, wobei die Rastnase in der Montageposition in der Rastausnehmung aufgenommen ist.

Gemäß einer Ausführungsform kann das Auslöseelement an einem freien Ende eines Stegs angeordnet sein, der elastisch an einer Halterung aufgehängt ist, wobei die Halterung in Umfangsrichtung und in axialer Richtung bezüglich einer Rotorwelle der elektrischen Maschine verläuft, wobei das freie Ende des Stegs bezüglich der Rotorwelle schräg in radialer Richtung nach außen von der Halterung absteht, wobei das zweite Rastelement von dem Steg ins Innere des Poltopfes gerichtet absteht und mit dem ersten Rastelement zusammenwirkt, um die Bürstenelektrode in der Montageposition zu halten.

Die Anschlagskante kann bei der Bewegung des Auslöseelements verschwenkt werden, wodurch die Anschlagskante außer Eingriff mit der Rastausnehmung gelangt.

Gemäß einem weiteren Aspekt ist eine elektrische Maschine mit einem Poltopf, einem Rotor und einer Montagevorrichtung vorgesehen. Der Rotor ist an einer Rotorwelle angeordnet und weist einen Kommutator mit einem Lamellenrad auf, wobei die Bürstenelektrode in einer Bürstenanordnung angeordnet ist und an einer bestimmten Position auf dem Lamellenrad durch eine Federkraft aufgedrückt wird, die der definierten Position entspricht.

Gemäß einem weiteren Aspekt ist ein Verfahren zur Montage der obigen elektrischen Maschine vorgesehen. Das Verfahren umfasst die folgenden Schritte:
- Einsetzen der Bürstenelektrode, insbesondere gegen die Federkraft, bis das zweite Rastelement so mit dem ersten Rastelement zusammenwirkt, dass die Bürstenelektrode gegen die Federkraft in der Montageposition gehalten wird; und
- Einsetzen der Bürstenanordnung mit der Montagevorrichtung in den Poltopf der elektrischen Maschine, so dass das Auslöseelement an einer definierten Position betätigt wird, um die Rastvorrichtung auszulösen, so dass die Bürstenelektrode freigegeben wird und insbesondere durch die Federkraft auf das Lamellenrad aufgedrückt wird.

### Kurzbeschreibung der Zeichnungen

Bevorzugte Ausführungsformen werden nachfolgend anhand der beigefügten Zeichnungen näher erläutert. Es zeigen:
- Figur 1: eine Querschnittsdarstellung durch eine elektrische Maschine mit einem mechanischem Kommutator;
- Figur 2a und 2b: eine schematische Darstellung einer der Bürstenanordnung mit einer Rastvorrichtung in einem verriegeltem bzw. nicht verriegeltem Zustand;
- Figur 3a und 3b: perspektivische Darstellungen der Rastvorrichtung; und
- Figur 4a bis 4d: Darstellungen zur Veranschaulichung der Verfahrensschritte zur Herstellung einer elektrischen Maschine.

### Beschreibung von Ausführungsformen

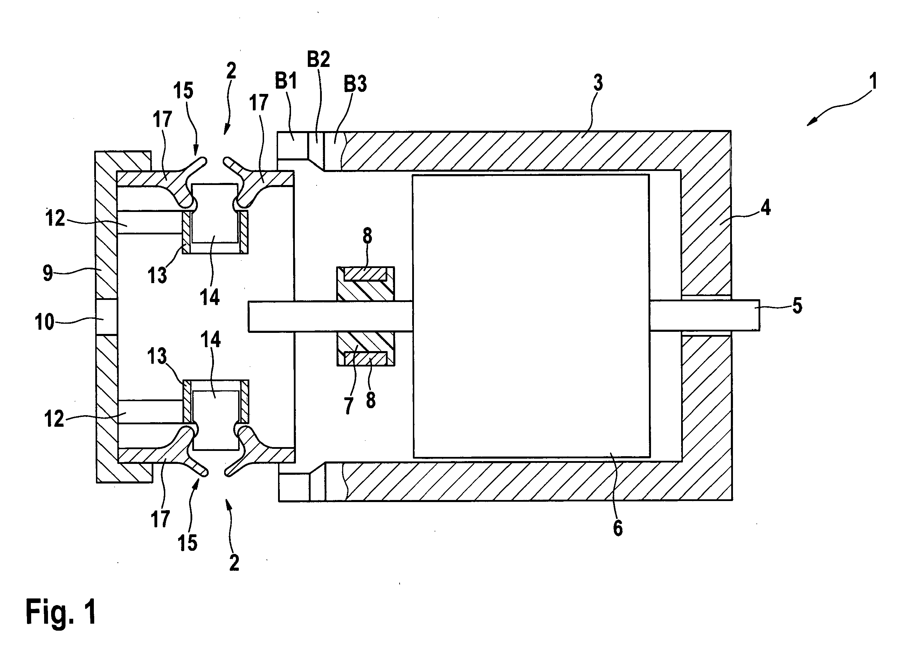

Figur 1 zeigt eine schematische Querschnittsdarstellung durch eine elektrische Maschine 1 vor dem Schritt des Einsetzens von Bürstenanordnungen 2. Die elektrische Maschine 1 umfasst ein Gehäuse mit einem Poltopf 3 und mit einem ersten Lagerschild 4. Das erste Lagerschild 4 ist in diesem Beispiel einstückig mit dem Poltopf 3 ausgebildet und können gemeinsam hergestellt werden.

In dem ersten Lagerschild 4 ist ein Wellenlager vorgesehen, in dem ein erstes Ende einer Rotorwelle 5 gelagert ist. Die Rotorwelle 5 trägt einen Rotor 6 mit Ankerwicklungen, die über einen Kommutator mit elektrischer Energie versorgt werden. Der Kommutator umfasst einen Lamellenträger 7, der kreisförmig ist und konzentrisch an der Rotorwelle 5 angeordnet ist. Der Lamellenträger 7 trägt in Umfangsrichtung um den Lamellenträger 7 angeordnete Kommutatorlamellen 8, die elektrisch leitend und gegeneinander isoliert sind. Jede Kommutatorlamelle 8 ist mit einem Anschluss einer Rotorspule (nicht gezeigt) der Ankerwicklung verbunden.

Die Kommutatorlamellen 8 auf dem Lamellenträger 7 werden durch die Bürstenanordnungen 2 elektrisch kontaktiert um zu jedem Zeitpunkt mindestens eine der Rotorspulen zu bestromen. Die Bürstenanordnungen 2 können an einem zweiten Lagerschild 9 angeordnet sein. Zur Montage der elektrischen Maschine 1 wird das zweite Lagerschild 9 so auf das Gehäuse 3 aufgesetzt, dass ein zweites Ende der Rotorwelle 5 durch eine Lageröffnung 10 in dem zweiten Lagerschild 9 mit einem entsprechendem zweiten Lager geführt und aufgenommen wird. Somit ist die Rotorwelle 5 an beiden Enden in dem Gehäuse der elektrischen Maschine 1 gelagert.

In dem zweiten Lagerschild 9 sind die Bürstenanordnungen 2 jeweils durch eine Halterung 12 gehalten. Jede Halterung 12 trägt einen hülsenförmigen Bürstenhalter 13 einer der Bürstenanordnungen 2. In dem hülsenförmigen Bürstenhalter 13 ist eine Bürstenelektrode 14 verschieblich angeordnet. Die Richtung der Verschiebung entspricht im Wesentlichen der Richtung zur Rotorwelle 5 oder leicht versetzt dazu. Die Bürstenelektroden 14 sind in Richtung der Rotorwelle 5 mit Hilfe eines Federelements 20 oder dergleichen vorgespannt. Aus Gründen der Übersichtlichkeit ist dieses Federelement 20 in Figur 1 nicht dargestellt.

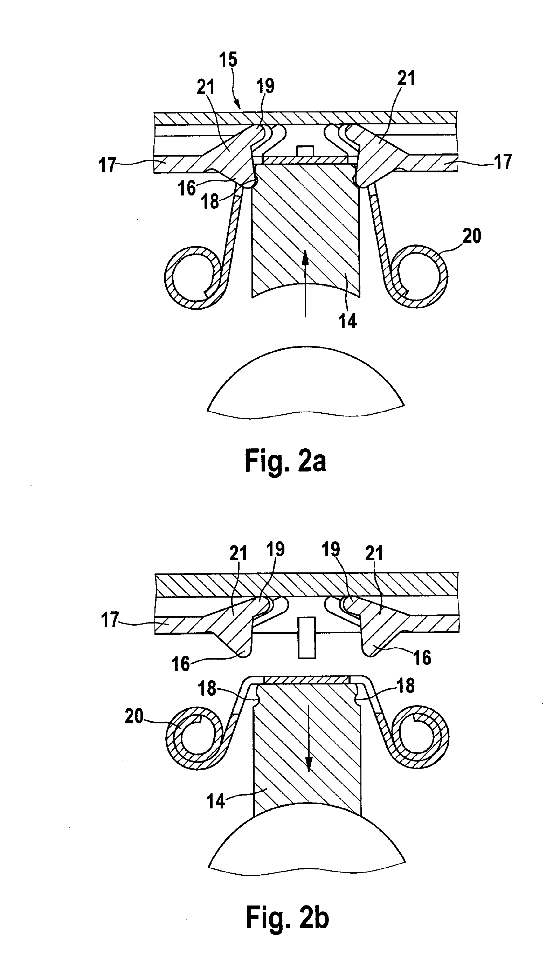

Jede Bürstenanordnung 2 umfasst eine Rastvorrichtung 15, der die entsprechende Bürstenelektrode 14 in einer Montageposition halten kann. Die Montageposition ist in der Figur 2a detailiert dargestellt. Der Rastmechanismus 15 kann in einem Blech 17 als Halterung ausgebildet sein. Dazu umfasst das Blech 17 Ausnehmungen, in denen elastisch bewegliche Stege 21 angeordnet sind. Alternativ kann die Bürstenanordnung 2 mit dem Rastmechanismus 15 aus Kunststoff ausgebildet sein.

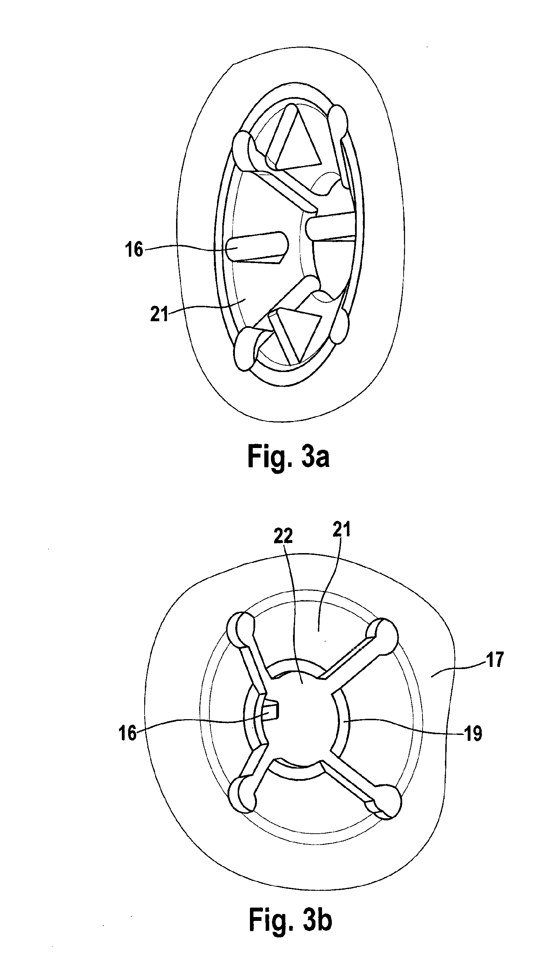

In den Figuren 3a und 3b ist zur Veranschaulichung die Rastvorrichtung 15 in einer perspektivischen Darstellung gezeigt. Die freien Enden der Stege 21 weisen jeweils eine Rastnase 16 als zweites Rastelement auf, die in eine Rastausnehmung 18 als erstem Rastelement in der Bürstenelektrode 14 eingreift. Weiterhin weist das freie Ende des Steges 21 einen Gleitabschnitt 19 als Auslöseelement auf, der schräg nach außen (bezüglich der radialen Richtung) von dem Blech 17 absteht.

Der Poltopf 3 des Gehäuses der elektrischen Maschine 1 weist an dem Ende, auf das das zweite Lagerschild 9 aufgesetzt werden soll, einen ersten Abschnitt B1 mit einer verringerten Wanddicke und/oder mit einem vergrößerten Innendurchmesser auf. An den ersten Abschnitt B1 des Poltopfes 3 schließt sich in Richtung des ersten Lagerschildes 4 ein rampenförmiger zweiter Abschnitt B2 an, bei dem sich die Wanddicke des Poltopfes 3 bzw. der Innendurchmesser des Poltopfes 3 ändert. An den rampenförmigen zweiten Abschnitt B2 schließt sich ein dritter Abschnitt B3 mit einer größeren Wanddicke bzw. mit einem kleineren Innendurchmesser an. Der Übergang von Abschnitt B2 zu Abschnitt B3 definiert den Bereich in axialer Richtung, an dem der Kommutator angeordnet sein soll.

Das zweite Lagerschild 9 weist bezüglich einer Richtung senkrecht zur Achsrichtung der Rotorwelle 5 einen Durchmesser auf, der im wesentlichen dem Innendurchmesser des ersten B1 Abschnittes des Poltopfes 3 entspricht, der den vergrößerten Innendurchmesser aufweist, so dass das zweite Lagerschild 9 in den Poltopf 3 eingesetzt werden kann. Der rampenförmige Abschnitt B2 dient dann als Anschlag für das zweite Lagerschild 9 in axialer Richtung, so dass das zweite Lagerschild 9 im Inneren des Gehäuses 3 in definierter Position gehalten wird. Bei Erreichen der definierten Position gelangt die Rastvorrichtung 15 an den Bereich, an dem der zweite Abschnitt B2 in den dritten Abschnitt B3 übergeht.

Die Rastvorrichtung 15 ist so ausgebildet, dass beim Einsetzen des Lagerschildes 9 in das Gehäuse 3 der Abschnitt mit dem größeren Innendurchmesser im Wesentlichen keine Kraft in radialer Richtung auf den Gleitabschnitt 19 ausübt. Dies wird realisiert, indem die freien Enden der Gleitabschnitte 19 nicht über den Umfangsrand des zweiten Lagerschildes 9 in radialer Richtung hervorstehen. Vorzugsweise weisen die äußeren Enden der Gleitabschnitte 19 in radialer Richtung im Wesentlichen den gleichen Abstand von der Mittenachse des zweiten Lagerschildes 9 auf wie dessen Umfangsrand. Gelangen jedoch die den Bürstenanordnungen 2 zugeordnete Gleitabschnitte 19 in Eingriff mit dem rampenförmigen Abschnitt B2, so werden diese in Richtung der Rotorwelle 5 gedrückt, wenn bei der Montage das zweite Lagerschildes 9 in axialer Richtung zu dem Poltopf 3 bewegt wird. Dadurch werden aufgrund der festen Kopplung der Gleitabschnitte 19 mit den Rastnasen 16 an den Enden der Stege 21 die Rastnasen 16 von der Bürstenelektrode 14 abgehoben. Dadurch gelangen die Rastausnehmungen 18 der Bürstenelektrode 14 außer Eingriff mit den Rastnasen 16, so dass die Bürstenelektrode 14 freigegeben wird. Durch die Federkraft des Federelementes 20 (siehe Figur 2a und 2b) wird die Bürstenelektrode 14 in Richtung des Lamellenrades 7 gedrückt.

Bei einem Hineinschieben des Lagerschildes 9 in den Poltopf 3, gleitet dann der Gleitabschnitt 19 der Rastvorrichtung 15 über den rampenförmigen zweiten Abschnitt B2 zu dem Abschnitt B3 mit dem geringeren Innendurchmesser des Poltopfes 3, so dass der Gleitabschnitt 19 in radialer Richtung nach innen gedrückt wird, um die Rastvorrichtung 15 auszulösen. Der rampenförmige Abschnitt B2 des Poltopfes 3 ist so angeordnet, dass das Auslösen der Rastvorrichtung 15 erst dann erfolgt, wenn die Bürstenelektrode 14 nach dem Auslösen auf den Kommutatorlamellen 8 des Lamellenrades 7 auftrifft.

In den Figuren 3a und 3b sind verschiedene Ansichten der Rastvorrichtung 15 perspektivisch dargestellt. Man erkennt, dass in diesem Beispiel die Rastvorrichtung 15 vier zueinander gerichtete Stege 21 aufweist, die in einer Ausnehmung in dem Blech 17 angeordnet sind. Die Stege 21 sind aus der Ebene des Bleches 17 heraus schräg abgebogen. Die Stege 21 sind in Richtung einer Mittenöffnung 22 gerichtet, so dass diese in Richtung der Ebene des Bleches 17 frei elastisch biegbar sind. An einer Seitenfläche der Stege 21, die der Seite der Stege 21 gegenüberliegt, in dessen Richtung die Stege 21 aus der Ebene des Bleches 17 schräg abgebogen sind, ist jeweils die Rastnase 16 angeordnet. Die Rastnasen 16 sind jeweils in der Mitte der Stege 21 bezüglich einer Umfangsrichtung um die Mittenöffnung 32 angeordnet. Die Rastnasen 33 dienen dazu, in der entsprechenden Rastausnehmung 18 an der Bürstenelektrode 14 oder an einem mit der Bürstenelektrode 14 verbundenen Bauteil einzugreifen, um die Bürstenelektrode 14 in einer entsprechenden Position gegen eine Federkraft zu halten.

Die in den Figuren 3a und 3b gezeigte Rastvorrichtung 15 wird so in den Poltopf 3 eingesetzt, das die Stege 21 schräg in radialer Richtung nach außen von der Rotorwelle 5 abstehen. Beim Einsetzen in das Gehäuse 3 gelangen die Gleitabschnitte 19 der Stege 21 in Eingriff mit dem rampenförmigen Abschnitt B2 des Poltopfes 3 und werden dadurch in Richtung der Ebene des Bleches 17 gebogen. Dadurch bewegen sich die mit den Gleitabschnitten 19 fest gekoppelten Rastnasen 16 in radialer Richtung und werden auf Grund der einseitigen Befestigung der Stege 31 verschwenkt, so dass die Anschlagsflächen der Rastnasen 16 die entsprechenden Bürstenelektroden 14 an den entsprechenden Rastausnehmungen 18 nicht länger halten können, und die Bürstenelektroden 14 aufgrund der wirkenden Federkraft eine Bewegung in Richtung der Kommutatorlamellen 8 ausführen.

Bei dem oben beschriebenen Beispiel werden vier Stege 21 mit jeweiligen Rastnasen 16 verwendet. Es ist jedoch möglich die Rastvorrichtung 15 mit einer davon verschiedenen Anzahl von Rastnasen 16 auszuführen, um die der Rastvorrichtung 15 zugeordnete Bürstenelektrode 14 in der Montageposition zu halten.

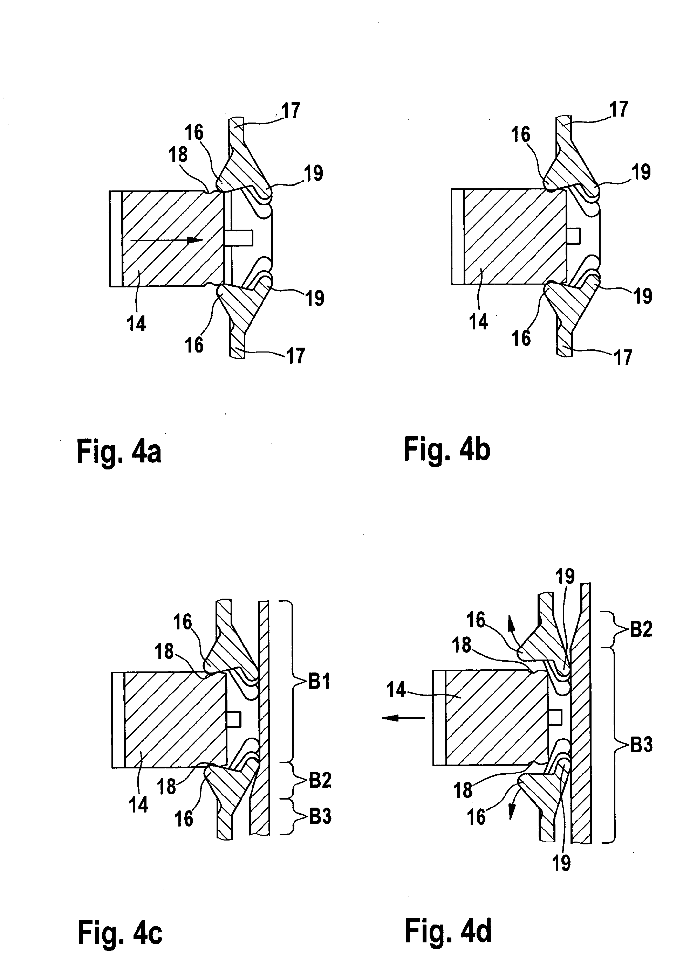

In den Figuren 4a bis 4d sind die einzelnen Verfahrensschritte zur Montage der elektrischen Maschine 1 mit Hilfe der oben beschriebenen Rastvorrichtung 15 schematisch dargestellt. In einem ersten Schritt, der in Figur 4a dargestellt ist, wird die Bürstenelektrode 14 in den hülsenförmigen Bürstenhalter 13 gegen die Federkraft des Federelements 20 eingeschoben, bis die Bürstenelektrode 14 in der Rastvorrichtung 15 einrastet (siehe Figur 4b) und gegen die Federkraft in der Montageposition gehalten wird. Bei Einsetzen der Bürstenanordnungen 2 in den Poltopf 3 des Gehäuses gleiten die Gleitabschnitte 19 der jeweiligen Rastvorrichtung 15 zunächst auf der Innenseite des ersten Abschnittes B1 mit dem größeren Innendurchmesser entlang oder gelangen nicht in Kontakt mit der Innenseite. Somit wird keine Kraft in radialer Richtung auf die Gleitabschnitte 19 der Rastvorrichtung 15 ausgeübt (siehe Figur 4c). Bei weiteren Hineinschieben der Bürstenanordnung 2 gelangen die Gleitabschnitte in Eingriff mit dem rampenförmigen Abschnitt B2, d.h. die Gleitabschnitte liegen in diesem Bereich an der Innenseite des Poltopfes an und entsprechend der Bewegung der Rastvorrichtung in Richtung des Inneren des Poltopfes 3 in radialer Richtung nach innen gedrückt (siehe Figur 4d). Dadurch werden die Rastnasen 16 verschwenkt und gelangen so außer Eingriff mit der zugeordneten Rastausnehmung 18 der Bürstenelektrode 14. Dadurch wird die Bürstenelektrode 14 wie in Figur 4d dargestellt ist, freigegeben und bewegt sich auf Grund der permanent wirkenden Federkraft in Richtung der Kommutatorlamellen 8. '

Die Rastvorrichtung 15 kann in einfacher Weise einstückig mit einem Blech 17 realisiert werden. Eine zusätzliche Betätigung nach den Zusammensetzen der Komponenten der elektrischen Maschine 1 ist nicht notwendig, da bereits beim Einsetzen der Bürstenanordnung 2 in das Gehäuse der elektrischen Maschine 1 die Rastvorrichtung auslöst wird und dadurch die Bürstenelektroden 14 freigegeben werden, so dass diese auf die Kommutatorlamellen 8 gedrückt werden.

## Patentansprüche

1. Montagevorrichtung für eine Bürstenanordnung (2) einer elektrischen Maschine (1), umfassend:
- eine Bürstenelektrode (14), die mit einem ersten Rastelement (18) versehen ist,
- eine mit der Bürstenanordnung (2) verbundene Rastvorrichtung (15), die ein zweites Rastelement (16) und ein Auslöseelement (19) aufweist, wobei das zweite Rastelement (16) so mit dem ersten Rastelement (18) zusammenwirkt, dass die Bürstenelektrode (14), insbesondere gegen eine Federkraft, in einer Montageposition gehalten wird,
wobei
ein Poltopf (3) der elektrischen Maschine (1) so ausgebildet ist, dass das Auslöseelement (19) bei einem Einsetzen der Bürstenanordnung (2) in den Poltopf (3) an einer definierten Position betätigt wird, um die Rastvorrichtung (15) auszulösen, so dass die Bürstenelektrode (14) freigegeben wird; **dadurch gekennzeichnet, dass**
die Rastvorrichtung (15) in einer Ausnehmung eines Bleches (17) angeordnet ist, wobei Stege (21) in Richtung einer Mittenöffnung (22) gerichtet, aus der Ebene des Bleches (17) heraus schräg abgebogen und in Richtung der Ebene des Bleches (17) frei elastisch biegbar sind.

2. Montagevorrichtung nach Anspruch 1, wobei der Poltopf (3) eine Struktur aufweist, so dass, wenn die Bürstenanordnung (2) die definierte Position erreicht hat, das Auslöseelement (19) mit der Struktur in Eingriff gelangt ist, um die Rastvorrichtung (15) auszulösen.

3. Montagevorrichtung nach Anspruch 2, wobei der Poltopf (3) einen stufenförmigen oder rampenförmigen Abschnitt aufweist, über den das Auslöseelement (19) bei dem Einsetzen der Bürstenanordnung (2) in den Poltopf (3) hinweggleitet und dadurch bewegt wird, wobei das Auslöseelement (19) so mit dem zweiten Rastelement (16) gekoppelt ist, dass das zweite Rastelement (16) durch die Bewegung des Auslöseelements (19) bewegt wird, so dass es außer Eingriff mit dem ersten Rastelement (18) gelangt.

4. Montagevorrichtung nach Anspruch 3, wobei das Auslöseelement (19) bei dem Einsetzen der Bürstenanordnung (2) in den Poltopf (3) in radialer Richtung Richtung zu einer Drehachse eines Rotors (6) der elektrischen Maschine (1) gedrückt wird, wodurch das zweite Rastelement (16) verschwenkt wird, und eine Anschlagsfläche des zweiten Rastelements (16) außer Eingriff zu dem ersten Rastelement (18) gelangt.

5. Montagevorrichtung nach einem der Ansprüche 1 bis 4, wobei das zweite Rastelement (16) einer Rastnase und das erste Rastelement (18) einer Rastausnehmung entsprechen, wobei die Rastnase in der Montageposition in der Rastausnehmung aufgenommen ist.

6. Montagevorrichtung nach Anspruch 5, wobei das Auslöseelement (19) an einem freien Ende eines Stegs (21) angeordnet ist, der elastisch an einer Halterung (17) aufgehängt ist, wobei die Halterung (17) in Umfangsrichtung und in axialer Richtung bezüglich einer Rotorwelle (5) der elektrischen Maschine (1) verläuft, wobei das freie Ende des Stegs (21) bezüglich der Rotorwelle (5) schräg in radialer Richtung nach außen von der Halterung (17) absteht, wobei das zweite Rastelement (16) von dem Steg (21) ins Innere des Poltopfes (3) gerichtet absteht und mit dem ersten Rastelement (18) zusammenwirkt, um die Bürstenelektrode (14) in der Montageposition zu halten.

7. Montagevorrichtung nach Anspruch 6, wobei eine Anschlagsfläche bei der Bewegung des Auslöseelements (19) verschwenkt wird, und dadurch die fläche außer Eingriff mit der Rastausnehmung gelangt.

8. Elektrische Maschine mit einem Poltopf (3), einem Rotor (6) und einer Montagevorrichtung nach einem der Ansprüche 1 bis 7, wobei der Rotor (6) an einer Rotorwelle (5) angeordnet ist und einen Kommutator mit einem Lamellenrad (7) aufweist, wobei die Bürstenelektrode (14) in einer Bürstenanordnung (2) angeordnet ist und an einer bestimmten Position auf dem Lamellenrad (7) durch eine Federkraft aufgedrückt wird, die der definierten Position entspricht.

9. Verfahren zur Montage einer elektrischen Maschine (1) nach Anspruch 8, mit folgenden Schritten:
- Einsetzen der Bürstenelektrode (14), insbesondere gegen die Federkraft, bis das zweite Rastelement (16) so mit dem ersten Rastelement (18) zusammenwirkt, dass die Bürstenelektrode (14), insbesondere gegen die Federkraft, in der Montageposition gehalten wird;
- Einsetzen der Bürstenanordnung (2) mit der Montagevorrichtung in den Poltopf der elektrischen Maschine (1), so dass das Auslöseelement (19) an einer definierten Position betätigt wird, um die Rastvorrichtung (15) auszulösen, so dass die Bürstenelektrode (14) freigegeben wird und, insbesondere durch die Federkraft, auf das Lamellenrad (7) aufgedrückt wird.

## Claims

1. Mounting apparatus for a brush arrangement (2) of an electrical machine (1), comprising:
- a brush electrode (14) which is provided with a first latching element (18),
- a latching apparatus (15) which is connected to the brush arrangement (2) and which has a second latching element (16) and a tripping element (19), wherein the second latching element (16) interacts with the first latching element (18) such that the brush electrode (14) is held in a mounting position, in particular against a spring force,
wherein
a pole pot (3) of the electrical machine (1) is designed such that the tripping element (19) is operated at a defined position when the brush arrangement (2) is inserted into the pole pot (3), in order to trip the latching apparatus (15) so that the brush electrode (14) is released;
**characterized in that**
the latching apparatus (15) is arranged in a recess in a metal sheet (17), wherein webs (21) are directed in the direction of a central opening (22), bent obliquely out of the plane of the metal sheet (17), and can be freely elastically bent in the direction of the plane of the metal sheet (17).

2. Mounting apparatus according to Claim 1, wherein the pole pot (3) has a structure so that, when the brush arrangement (2) has reached the defined position, the tripping element (19) engages with the structure in order to trip the latching apparatus (15).

3. Mounting apparatus according to Claim 2, wherein the pole pot (3) has a step-like or ramp-like section over which the tripping element (19) slides away when the brush arrangement (2) is inserted into the pole pot (3) and as a result is moved, wherein the tripping element (19) is coupled to the second latching element (16) such that the second latching element (16) is moved by the movement of the tripping element (19) such that it disengages from the first latching element (18).

4. Mounting apparatus according to Claim 3, wherein the tripping element (19) is pushed in a radial direction in relation to a rotation axis of a rotor (6) of the electrical machine (1) when the brush arrangement (2) is inserted into the pole pot (3), as a result of which the second latching element (16) is pivoted, and a stop face of the second latching element (16) disengages from the first latching element (18).

5. Mounting apparatus according to one of Claims 1 to 4, wherein the second latching element (16) corresponds to a latching lug and the first latching element (18) corresponds to a latching recess, wherein the latching lug is accommodated in the latching recess in the mounting position.

6. Mounting apparatus according to Claim 5, wherein the tripping element (19) is arranged at a free end of the web (21) which is suspended elastically from a holding means (17), wherein the holding means (17) runs in the circumferential direction and in the axial direction in relation to a rotor shaft (5) of the electrical machine (1), wherein the free end of the web (21) projects outward from the holding means (17) obliquely in the radial direction in relation to the rotor shaft (5), wherein the second latching element (16) projects in a manner directed from the web (21) into the interior of the pole pot (3) and interacts with the first latching element (18) in order to hold the brush electrode (14) in the mounting position.

7. Mounting apparatus according to Claim 6, wherein a stop face is pivoted as the tripping element (19) moves, and as a result the face disengages from the latching recess.

8. Electrical machine having a pole pot (3), a rotor (6) and a mounting apparatus according to one of Claims 1 to 7, wherein the rotor (6) is arranged on a rotor shaft (5) and has a commutator with a lamination wheel (7), wherein the brush electrode (14) is arranged in a brush arrangement (2) and is pressed onto the lamination wheel (7) by a spring force in a specific position which corresponds to the defined position.

9. Method for mounting an electrical machine (1) according to Claim 8, comprising the following steps:
- inserting the brush electrode (14), in particular against the spring force, until the second latching element (16) interacts with the first latching element (18) such that the brush electrode (14) is held in the mounting position, in particular against the spring force;
- inserting the brush arrangement (2) with the mounting apparatus into the pole pot of the electrical machine (1), so that the tripping element (19) is operated in a defined position in order to trip the latching apparatus (15), so that the brush electrode (14) is released and is pressed onto the lamination wheel (7), in particular by the spring force.

## Revendications

1. Dispositif de montage pour un agencement de balai (2) d'une machine électrique (1), comprenant :
- une électrode à balai (14) munie d'un premier élément d'encliquetage (18),
- un dispositif d'encliquetage (15) connecté à l'agencement de balai (2), lequel présente un deuxième élément d'encliquetage (16) et un élément de déclenchement (19), le deuxième élément d'encliquetage (16) coopérant avec le premier élément d'encliquetage (18) de telle sorte que l'électrode à balai (14) soi retenue dans une position de montage, en particulier à l'encontre d'une force de ressort,
un pot polaire (3) de la machine électrique (1) étant réalisé de telle sorte que l'élément de déclenchement (19) soit actionné dans une position définie lors de l'insertion de l'agencement de balai (2) dans le pot polaire (3), afin de déclencher le dispositif d'encliquetage (15), de sorte que l'électrode à balai (14) soit libérée ; **caractérisé en ce que**
le dispositif d'encliquetage (15) est disposé dans un évidement d'une tôle (17), des nervures (21) étant orientées dans la direction d'une ouverture centrale (22), étant recourbées obliquement hors du plan de la tôle (17) et pouvant être fléchies élastiquement librement dans la direction du plan de la tôle (17).

2. Dispositif de montage selon la revendication 1, dans lequel le pot polaire (3) présente une structure telle que lorsque l'agencement de balai (2) a atteint la position définie, l'élément de déclenchement (19) soit parvenu en prise avec la structure afin de déclencher le dispositif d'encliquetage (15).

3. Dispositif de montage selon la revendication 2, dans lequel le pot polaire (3) présente une portion de forme étagée ou en forme de rampe, au-delà de laquelle l'élément de déclenchement (19) glisse et est ainsi déplacé lors de l'insertion de l'agencement de balai (2) dans le pot polaire (3), l'élément de déclenchement (19) étant accouplé au deuxième élément d'encliquetage (16) de telle sorte que le deuxième élément d'encliquetage (16) soit déplacé par le déplacement de l'élément de déclenchement (19) de manière à ce qu'il parvienne hors d'engagement avec le premier élément d'encliquetage (18).

4. Dispositif de montage selon la revendication 3, dans lequel l'élément de déclenchement (19), lors de l'insertion de l'agencement de balai (2) dans le pot polaire (3), est pressé dans la direction radiale par rapport à un axe de rotation d'un rotor (6) de la machine électrique (1), de sorte que le deuxième élément d'encliquetage (16) soit pivoté, et qu'une surface de butée du deuxième élément d'encliquetage (16) parvienne hors d'engagement avec le premier élément d'encliquetage (18).

5. Dispositif de montage selon l'une quelconque des revendications 1 à 4, dans lequel le deuxième élément d'encliquetage (16) correspond à un nez d'encliquetage et le premier élément d'encliquetage (18) correspond à un évidement d'encliquetage, le nez d'encliquetage étant reçu dans la position de montage dans l'évidement d'encliquetage.

6. Dispositif de montage selon la revendication 5, dans lequel l'élément de déclenchement (19) est disposé à une extrémité libre d'une nervure (21) qui est accrochée élastiquement à une fixation (17), la fixation (17) s'étendant dans la direction périphérique et dans la direction axiale par rapport à un arbre de rotor (5) de la machine électrique (1), l'extrémité libre de la nervure (21) faisant saillie par rapport à l'arbre de rotor (5) obliquement dans la direction radiale vers l'extérieur depuis la fixation (17), le deuxième élément d'encliquetage (16) faisant saillie de manière orientée vers l'intérieur du pot polaire (3) depuis la nervure (21) et coopérant avec le premier élément d'encliquetage (18) pour retenir l'électrode à balai (14) dans la position de montage.

7. Dispositif de montage selon la revendication 6, dans lequel une face de butée est pivotée lors du déplacement de l'élément de déclenchement (19) et de ce fait la surface parvient hors d'engagement avec l'évidement d'encliquetage.

8. Machine électrique comprenant un pot polaire (3), un rotor (6) et un dispositif de montage selon l'une quelconque des revendications 1 à 7, dans laquelle le rotor (6) est disposé sur un arbre de rotor (5) et présente un collecteur avec une roue à lamelles (7), l'électrode à balai (14) étant disposée dans un agencement de balai (2) et étant pressée dans une position déterminée sur la roue à lamelles (7) par une force de ressort qui correspond à la position définie.

9. Procédé de montage d'une machine électrique (1) selon la revendication 8, comprenant les étapes suivantes :
- insertion de l'électrode à balai (14), en particulier à l'encontre de la force de ressort, jusqu'à ce que le deuxième élément d'encliquetage (16) coopère avec le premier élément d'encliquetage (18) de telle sorte que l'électrode à balai (14) soi retenue dans la position de montage, en particulier à l'encontre de la force de ressort ;
- insertion de l'agencement de balai (2) avec le dispositif de montage dans le pot polaire de la machine électrique (1), de telle sorte que l'élément de déclenchement (19) soit actionné dans une position définie, afin de déclencher le dispositif d'encliquetage (15), de sorte que l'électrode à balai (14) soit libérée et soit pressée sur la roue à lamelles (17), notamment par la force de ressort.
